Europäisches Patentamt

**European Patent Office**

**Office européen des brevets**

(11) Publication number:

**0 379 251**
**A2**

# EUROPEAN PATENT APPLICATION

(21) Application number: 90200090.0

(22) Date of filing: 15.01.90

(51) Int. Cl.5 **C08F 257/00, C08F 299/00,**
**C06B 45/10, //(C08F257/00,**
**220:28)**

(30) Priority: 17.01.89 US 297132

(43) Date of publication of application:
**25.07.90 Bulletin 90/30**

(84) Designated Contracting States:
**BE DE FR GB IT NL**

(71) Applicant: **SARTOMER COMPANY, INC.**
**Marshall Building West Chester Plaza**
**West Chester, PA 19382(US)**

(72) Inventor: **The designation of the inventor has**
**not yet been filed**

(74) Representative: **Dubost, Thierry**
**c/o NORSOLOR Service Propriété**
**Industrielle B.P. 57**
**F-62670 Mazingarbe(FR)**

(54) **Thermoplastic elastomer composed of macromolecular monomers and alkoxyalkyl acrylate monomers.**

(57) Thermoplastic elastomers made by copolymerizing macromolecular monomers with alkoxyalkyl acrylates serve as binders for solid propellants which binders have high burn rates and increased insensitivility over conventional binders.

EP 0 379 251 A2

# THERMOPLASTIC ELASTOMER COMPOSED OF MACROMOLECULAR MONOMERS AND ALKOXYALKYL ACRYLATE MONOMERS

The present invention is directed to a composition of matter comprising copolymers of macromolecular monomers and alkoxyalkyl acrylates and their use as binders for solid propellants with high burn rates and increased insensitivity over conventional binders.

It is known that thermoplastic elastomers can be used as binders for the energetic materials in solid propellants. It is a permanent objective of the solid propellants industry, and it is the problem to be solved by the present invention, to devise binders exhibiting increased shock insensitivity and increased thermal insensitivity, high burn rate and excellent wetting of the energetic material.

We have now found that this problem can be solved by using as binders for the energetic materials in solid propellants certain copolymers of macromolecular monomers and certain alkoxyalkyl acrylate monomers.

Macromolecular monomers comprising poly(vinyl aromatic compound) are already known from U.S. Patent N° 3,786,116. Copolymer compositions comprising these macromolecular monomers and alkyl acrylates are also taught in this patent.

U.S. Patent 3,928,255 also teaches hydrophilic copolymers made from macromolecular monomers and either hydroxyalkyl acrylates or hydroxyalkoxyalkyl acrylates.

A first object of the present invention is a thermoplastic elastomer copolymer comprising (a) a macromolecular monomer comprising poly(vinyl aromatic compound) and having a polymerizable end group and (b) an alkoxyalkyl acrylate.

The macromolecular monomer comprising poly(vinyl aromatic compound) present in the thermoplastic elastomer copolymer of the invention has been described in U.S. Patent N° 3,786,116, the content of which is hereby incorporated by reference.

The thermoplastic elastomers of the invention are made of copolymerizing macromolecular monomers with alkoxyalkyl acrylates in solvent under a nitrogen purge. The range of copolymer molecular weight formed is generally from about 150,000 to about 1,000,000. The composition of the copolymer generally ranges from about 5 to about 50 weight percent macromolecular monomer.

The alkoxyalkyl acrylates useful for copolymerizing with the macromolecular monomers are generally those where the alkyl group and the alkoxy group have from 1 to 12 carbon atoms, preferably 1 to 4 carbon atoms and more preferably 1 or 2 carbon atoms. Especially preferred are alkoxyethyl acrylates, and more specifically methoxyethyl acrylate.

The macromolecular monomers are prepared by anionic polymerization of one or more vinyl aromatic compounds in the presence of a lithium-based initiator such as lithium metal, alkyl lithium compounds, aryl lithium compounds or mixtures thereof. The preferred initiators are alkyl lithium compounds such as the lower alkyl lithium compounds. The preferred initiator is sec-butyl lithium. Typical of the vinyl aromatic compounds useful in the macromolecular monomers are styrene, alpha-methylstyrene, nuclear-methylstyrene, indene, and p-tert-butylstyrene. Mixtures of two or more of these may be used if desired. The polymeric anion is then terminated with a compound which provides an addition polymerizable end group, such as acryloyl or methacryloyl chloride. The molecular weight distribution of the macromolecular monomers may range up to 3 or more, preferably up to about 2.

Since in some cases the polymeric anion resulting from the anionic polymerization is highly reactive and non-selective in reaction with a terminating agent which incorporates an addition polymerizable group into the macromolecular monomer, resulting in polymer chains having undesired functionality and molecular weight, the "living polymer" can be made less reactive by capping the polymeric anion with a less reactive end group prior to termination. Suitable capping agents include lower alkylene oxides or sulfides, such as ethylene and propylene oxide or sulfide.

The range of molecular weight of macromolecular monomer used is generally from about 3,000 to about 50,000. The mole ratio of monomer to initiator is generally high, such as 500 to 1. Azo, peroxide, and percarbonate initiators can be used for the copolymerization.

The solvents used for copolymerization may be any of the known solvents, especially ethyl acetate, cyclohexane, toluene, or a mixture of these solvents. The copolymerization is generally run at about 30 to about 50 percent solids and about 45 to about 85° C depending upon the desired copolymer molecular weight and the initiator system. The time of polymerization is adjusted so that the acrylate monomer is greater than 95% converted to copolymer.

A second object of the present invention is a solid propellant of the composite type comprising a solid oxidizer and a copolymer binder, characterized in that the copolymer binder is a thermoplastic elastomer copolymer such as disclosed hereinabove. In the solid propellant of the invention, the proportion of the solid oxidizer is generally from about 45 to about 95 weight percent and the proportion of the copolymer binder is generally from 5 to 55 weight percent.

The solid oxidizers useful in the propellants are employed in powdered form and include the nitrates, perchlorates, chlorates, permanganates, chromates, and dichromates of the alkali or alkaline earth metals, ammonia, hydrazine, or guanidine. Examples of the solid oxidizers are ammonium nitrate, ammonium perchlorate, sodium nitrate, potassium perchlorate, lithium chlorate, calcium nitrate, barium perchlorate, strontium chlorate, and the like, with ammonium perchlorate being preferred. Also useful for this purpose are the cyclic nitramines such as cyclotrimethylenetrinitramine and cyclotetramethylenetetranitramine.

The propellant also preferably includes a solid fuel component in powdered form. Examples of these are metals such as aluminium, boron, magnesium, and beryllium ; metal alloys such as the aluminium alloys of boron, magnesium, manganese, zinc, and copper ; metal hydrides such as the hydrides of aluminium and beryllium. These solid fuels are used in concentrations consistent with good mixing characteristics (usually between about 2 et 30 weight percent of the propellant composition).

The propellant composition may also include other conventional propellant ingredients such as antioxidants, wetting agents, metal oxides, reinforcing agents, burning rate catalysts, resonance suppressors, and the like. These additives usually form 10% or less of the propellant composition.

The following example is meant to further illustrate but not to limit the invention.

## EXAMPLE I

A resin reactor was charged with 1787.5 g of ethyl acetate and agitation begun. To the reactor was added 144.4 g of a 30,000 MW macromolecular monomer of polystyrene capped with methacrylate and the reactor was heated to 50°C until the monomer was completely dissolved. The reactor was then cooled to 25°C and a mixture of 818.1 g of methoxyethyl acrylate and 2.07 g of azobisisobutyronitrile was added. After purging the reactor with nitrogen, the mixture was heated to 69°C and maintained at the temperature for 16 hours. The copolymer solution obtained was 34.2% solids. The peak molecular weight obtained by GPC was 632,000 and the weight average molecular weight was 830,000 for the copolymer. The conversion of macromolecular monomer was 90.3% and of the acrylate monomer was 97.3%.

The devolatilized copolymer was non-tacky and exhibited rubber-like properties.

Use of the copolymer as binder in a rocket propellant mixture showed great improvement in the rate of burning and in the insensitivity to shock and the wetting of the energetic material.

## Claims

1 - A thermoplastic elastomer copolymer comprising (a) a macromolecular monomer comprising poly(vinyl aromatic compound) and having a polymerizable end group and (b) an alkoxyalkyl acrylate.

2 - The copolymer of claim 1 wherein said macromolecular monomer comprises a poly(vinyl aromatic compound) capped with alkylene oxide or alkylene sulfide and terminated with an acrylate or methacrylate end group.

3 - A copolymer according to claim 1 or claim 2, comprising 5 to 50 weight percent of the macromolecular monomer (a) and 50 to 95 weight percent of the alkoxyalkyl acrylate.

4 - A copolymer according to one of claims 1 to 3, wherein the weight average molecular weight of the macromolecular monomer is from 3,000 to 50,000.

5 - A copolymer according to one of claims 1 to 4, wherein the alkoxy group and the alkyl group of the alkoxyalkyl acrylate (b) have from 1 to 12 carbon atoms.

6 - A copolymer according to one of claims 1 to 5, wherein the alkoxyalkyl acrylate is methoxyethyl acrylate.

7 - A copolymer according to one of claims 1 to 6, wherein the vinyl aromatic compound of the macromolecular monomer is styrene.

8 - A copolymer according to one of claims 1 to 7, having a molecular weight from 150,000 to 1,000,000.

9 - A solid propellant of the composite type comprising a solid oxidizer and a copolymer binder, characterized in that the copolymer binder is a thermoplastic elastomer copolymer according to one of claims 1 to 8.

10 - A solid propellant according to claim 9, comprising 45 to 95 weight percent of the solid oxidizer and 5 to 55 weight percent of the copolymer binder.

11 - A solid propellant according to one of claims 9 and 10, wherein the solid oxidizer is selected from nitrates, perchlorates, chlorates, permanganates, chromates, and dichromates of the alkali or alkaline earth metals, ammonia, hydrazine, or guanidine.

12 - A solid propellant according to one of claims 9 to 11, further comprising a solid fuel component in powdered form.

13 - A solid propellant according to claim 12, wherein the solid fuel component in powdered form is selected from metals, metal alloys and metal hydrides.

14 - A solid propellant according to one of claims 12 and 13, wherein the solid fuel component represents from 2 to 30 weight percent of the propellant composition.

15 - A solid propellant according to one of claims 9 to 14, further comprising at least one conventional propellant ingredient selected from antioxidants, wetting agents, metal oxides, reinforcing agents, burning rate catalysts and resonance suppressors.

16 - A process for preparing a thermoplastic elastomer copolymer according to claim 1, comprising copolymerizing in a solvent and in the presence of an initiator (a) a macromolecular monomer comprising poly(vinyl aromatic compound) and having a polymerizable end groupe and (b) an alkoxyalkyl acrylate.

17 - A process according to claim 16, characterized in that copolymerization is run at a temperature between 45°C and 85°C.

18 - A process according to claim 16 or claim 17, characterized in that the solvent is selected from ethyl acetate, cyclohexane, toluene or a mixture of these solvents.